Europäisches Patentamt

European Patent Office

Office européen des brevets

(11) Publication number: **0 311 013**
**A2**

# EUROPEAN PATENT APPLICATION

(21) Application number: **88116401.6**

(22) Date of filing: **04.10.88**

(51) Int. Cl.⁴: **C02F 1/76 , D21C 9/10**

(30) Priority: **05.10.87 US 104793**

(43) Date of publication of application:
**12.04.89 Bulletin 89/15**

(84) Designated Contracting States:
**AT BE CH DE ES FR GB GR IT LI LU NL SE**

(71) Applicant: **Champion International Corporation**
**One Champion Plaza**
**Stamford Connecticut 06921(US)**

(72) Inventor: **Johnson Paul,M. Jr.**
**41 Peacock Circle**
**Washingtonville, N.-Y. 10992(US)**

(74) Representative: **Patentanwälte Deufel- Schön-Hertel- Lewald- Otto**
**Isartorplatz 6 PO Box 260247**
**D-8000 München 26(DE)**

(54) **Chlorine dioxide oxidation of mill effluent color.**

(57) Method of reducing color in bleach plant extraction filtrates derived in the bleaching of pulp without giving rise to the formation of chloroform and other chlorinated by products comprising contacting a bleach plant extraction filtrate with chlorine dioxide or chlorine dioxide in admixture with small amounts of chlorine at a temperature of about 60 to about 200 °F and a pH of about 3.0 to about 6.0, using as the total dose of chlorine dioxide or chlorine dioxide in admixture with chlorine, 0.15 to 0.30 ppm as active chlorine/SCU.

EP 0 311 013 A2

# CHLORINE DIOXIDE OXIDATION OF MILL EFFLUENT COLOR

This invention relates to processes for reducing the pollution of streams or other bodies of water that has been caused in the past by the discharge into such bodies of water of bleach plant extraction filtrates from paper mills that produce bleach pulp. More particularly this invention relates to processes for reducing the color in such bleach plant extraction filtrates and which do not contribute to by-product generation, specifically chloroform and total organic chlorine compound prodution. Still more particularly, the invention relates to a method suitable for effecting a fairly rapid decolorization of bleach plant extraction filtrates employing chlorine dioxide in the chemical oxidation of bleach plant extraction filtrates.

The various effluent treatment technologies used by the pulp and paper industry are very efficient in reduction of waste biological oxygen demand. Unfortunately, these alone do little to reduce the typical high colored discharge from Kraft pulp and paper mills. Many color reduction technologies have been investigated to reduce the color discharged to receiving streams. Most methods have prohibitive cost and/or by-product handling problems associated with their use. For example, filtration and coagulation technologies present a materials handling and disposal problem added to high operating and chemical costs. Non-chlorine oxidants have the attraction of low by-product generation but are either kinetically slow and/or too costly. Chlorine oxidation in bleaching is widely used by the pulp and paper industry and has a chemical cost advantage but suffers from the threat of increasingly prohibitive chlorinated by-product limits.

## DESCRIPTION OF THE PRIOR ART

The prior art is replete with descriptions of methods for treating wood pulp with chlorine dioxide so that reaction between the wood pulp and chlorine dioxide may take place in a multi-stage bleaching of cellulosic fibrous pulp.

Rapson, U.S. Patent No. 3,698,995 discloses the use of chlorine or chlorine dioxide, preferably an aqueous solution of both, in the bleaching stage of a paper mill. It was found desirable, although not essential, that chlorine dioxide be substituted for a substantial part or all of the chlorine in the bleaching stages in order to diminish the carry-over of chloride into the chemical recovery system. Rapson is clearly concerned with bleaching and not treatment of the heavily colored bleach plant oxidative extraction filtrate derived in the practice of bleaching.

De Montigny et al, U.S. Patent No. 3,725,193 discloses an improved process for the chemical reaction between a gas and a wood pulp. The improvement is provided by the substantially instantaneous reaction between the pulp and gaseous ammonia or gaseous chlorine dioxide, thereby bleaching the cellulosic fibrous pulp. De Montigny does not teach the advantages of employing chlorine dioxide rather than chlorine. Further the actual pulp bleaching stage is involved and not the high colored bleach plant oxidative extraction filtrate.

Reeve, U.S. Patent No. 3,986,923 discloses a method for removal of dissolved salts from sulfide liquors formed in pulp mill recovery and regeneration operations. Reeve disclosed a particular bleaching operation involving an initial bleaching of the pulp with an aqueous solution containing chlorine dioxide, an intermediate washing, a caustic extraction using aqueous sodium hydroxide solution, a further washing, a further bleaching with an aqueous solution of chlorine dioxide, another washing, a further caustic extraction using sodium hydroxide, an additional washing, a final bleaching with chlorine dioxide solution and a final washing. It is clear that Reeves is concerned with chlorine dioxide bleaching.

Noreus et al, U.S. Patent No. 4,098,639 discloses a process for reducing the requirement of fresh chemicals without increasing emissions in the pulping of cellulosic material. Noreus et al discloses the use of chlorine dioxide for bleaching in the bleaching stage subsequent to the initial oxygen bleaching stage. Nothing in this patent suggests that chlorine dioxide can be employed to treat highly colored mill effluent.

The treatment described in the aforementioned patents takes place in the bleaching tower to which unbleached pulp which has been previously washed in brown stock washers is supplied along with gaseous and/or aqueous solutions of chlorine and/or chlorine dioxide.

The treatment which forms the subject matter of the instant invention is of bleach plant extraction filtrates and particularly of oxidative extraction filtrates i.e. Eo filtrates.

The subject matter of the invention, more specifically the treatment involved, is color reduction of bleach plant extraction filtrates by chemical oxidation which is technically feasible, brought about at low cost and which is effective to reduce chloroform and other chlorinated by-product generation.

Chlorination of bleach plant filtrates is technically and economically feasible for reducing color in such filtrates prior to their discharge into the stream, river or other body of water. However, the considerable amounts of chloroform and other chlorinated by-products generated in such treatment processes have become a concern in connection with the environment and because of the need to comply with governmental regulations. Optimization of the color oxidation process must obviously include minimum environmental impact as well as maximum color reduction at the lowest possible cost.

It has been established by experimentation that chloroform is generated immediately during bleach plant extraction filtrate color oxidation with chlorine and is directly attributable to the reaction with chlorine. The inventor herein has found that chlorine dioxide is as effective as chlorine in bleach plant filtrate color reduction, however, chlorine dioxide does not contribute to chloroform or other chlorinated by-product generation.

An object of one broad aspect of the present invention is to provide a technically and economically feasible and environmentally acceptable method for reducing color in bleach plant extraction filtrates.

An object of a further aspect of the present invention is to provide such a method which does not contribute to chloroform and other chlorinated by-product generation.

An object of another aspect of the present invention is to provide a substitute for chlorine which is as effective as the chlorine in the reduction of color in bleach plant extraction filtrates, but which does not contribute to chloroform and other chlorinated by-product generation.

In accordance with the invention, it has now been found that chlorine dioxide oxidation at optimum dosage, temperature and pH will reduce pulp mill effluent color at reasonable cost with very low by-product generation. There is no post treatment required beyond typical mill effluent waste treatment and the treated stream may be recycled for further use if so desired.

While the basic inventive concept can be expressed as the use of chlorine dioxide in the oxidation of color in bleach mill effluent for producing reduced chloroform generation, it is within the scope of the invention to employ chlorine dioxide alone or in admixture with small amounts of chlorine under conditions having no adverse environmental impact.

The optimum conditions for chlorine dioxide and/or chlorine and chlorine dioxide oxidation of color in bleach mill extraction filtrates is a temperature of 60 to 200° F, preferably 140-150° F, a reaction pH of approximately 3.0 -6.0 and preferably 4.5 and a total oxidant dose, chlorine dioxide or chlorine dioxide and chlorine of 0.15 to 0.30 in pounds as active chlorine/pound of color (0.15 to 0.30 ppm as active chlorine/SCU). The chlorine when present should not exceed 10% of the entire dose of chlorine and chlorine dioxide expressed as active chlorine and preferably is maintained at a concentration of from about 2 to 8.5% of the total of chlorine and chlorine dioxide. For carrying out satisfactory color reduction, the amount of chlorine is not limited to the aforenoted range. Amounts in excess of 8.5% can be employed if the levels of chloroform and organic chlorine containing compounds formed are acceptable environmentally and otherwise.

In accordance with the invention it has been found that only the total oxidant dose is significant in color reduction regardless of chlorine or chlorine dioxide content. Color reduction dependency on only the total oxidant dose establishes that chlorine dioxide is as effective as chlorine in color reduction. At the same time, chloroform generation is only dependent on the amount of chlorine used to reduce color. The sole dependency of chloroform generation on chlorine indicates that chlorine dioxide does not contribute to chloroform generation. The small amount of chloroform generated from runs using chlorine and chlorine dioxide is due to the chlorine in the oxidant solution and is within acceptable levels. Zero chloroform generation is only possible with zero chlorine content in the oxidant.

This invention will now be described by way of example, with reference to the accompanying drawings, in which:

Fig. 1 is a flow sheet in schematic form of a part of a bleached pulp mill embodying the invention;

Fig. 2 is a flow sheet of a modification of Fig. 1; and

Fig. 3 is a schematic flow sheet of a further modification of the embodiment of Fig. 1.

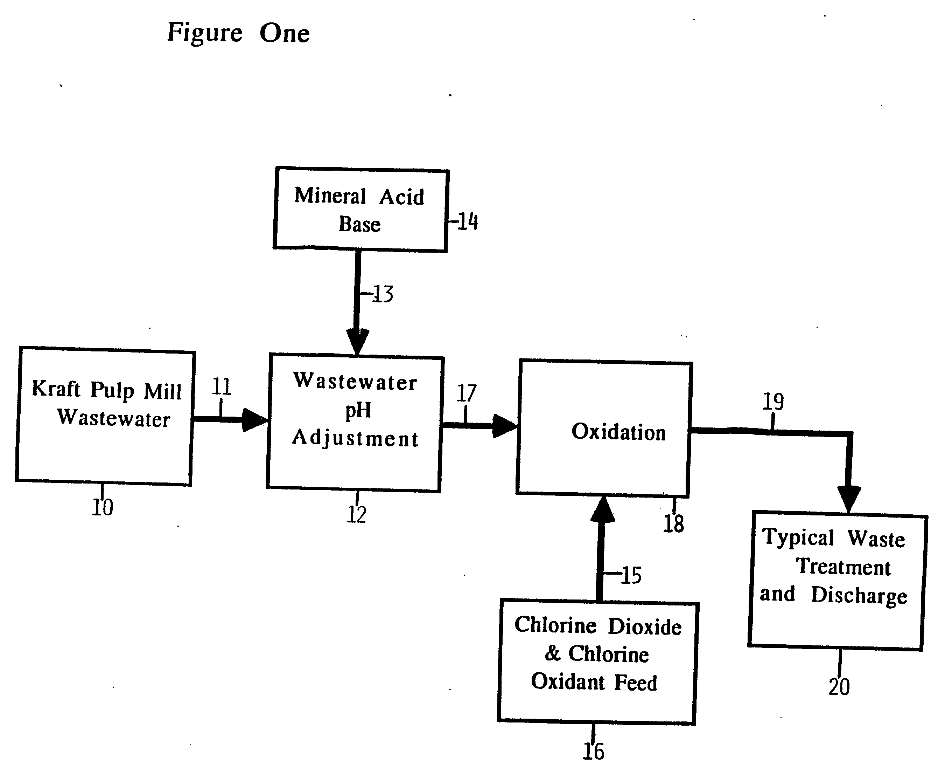

With reference to Fig. 1, there is shown a system for chlorine dioxide/chlorine oxidation of mill effluent which is included as part of pulp bleaching system, for example, as part of a CEDED bleaching system. In such latter system unbleached pulp from a digester is supplied to brown stock washers where it is washed. The washed, unbleached pulp from the washers is conducted to a first stage bleach tower and then passed in sequence through a washer, a first stage caustic extraction tower, a washer, a second stage bleach tower, a washer, a second stage caustic extraction tower, a washer, a third stage bleach tower and a final washer, bleached pulp for supply to a paper machine being obtained from the final washer. The system shown in Fig. 1 may be used in connection with any one of the effluents produced in this system or any combination thereof. Thus the system may employ as starting material the effluent from the brown stock washers of from any subsequent extraction tower or washer.

If for example the wash water from the brown stock washers is to be used as starting material, this waste water is supplied to a holding tank from which it is conducted via a line 11 to a pH adjustment tank 12. Mineral acid or base (sodium hydroxide) is supplied from supply tank 14 through line 13 into pH adjustment tank 12. Following suitable adjustment of the pH, the brown stock wash water having a pH of from 3.0 to 6.0 is passed through line 17 into an oxidation vessel or tower 18. Chlorine dioxide or chlorine dioxide containing small amounts of chlorine is supplied through line 15 into the oxidation vessel or tower 18 and color reduction allowed to take place. The treated wash water may then be recycled into the system for example for use in the brown stock washers or alternatively subjected to the conventional mill effluent waste treatment and then discharged.

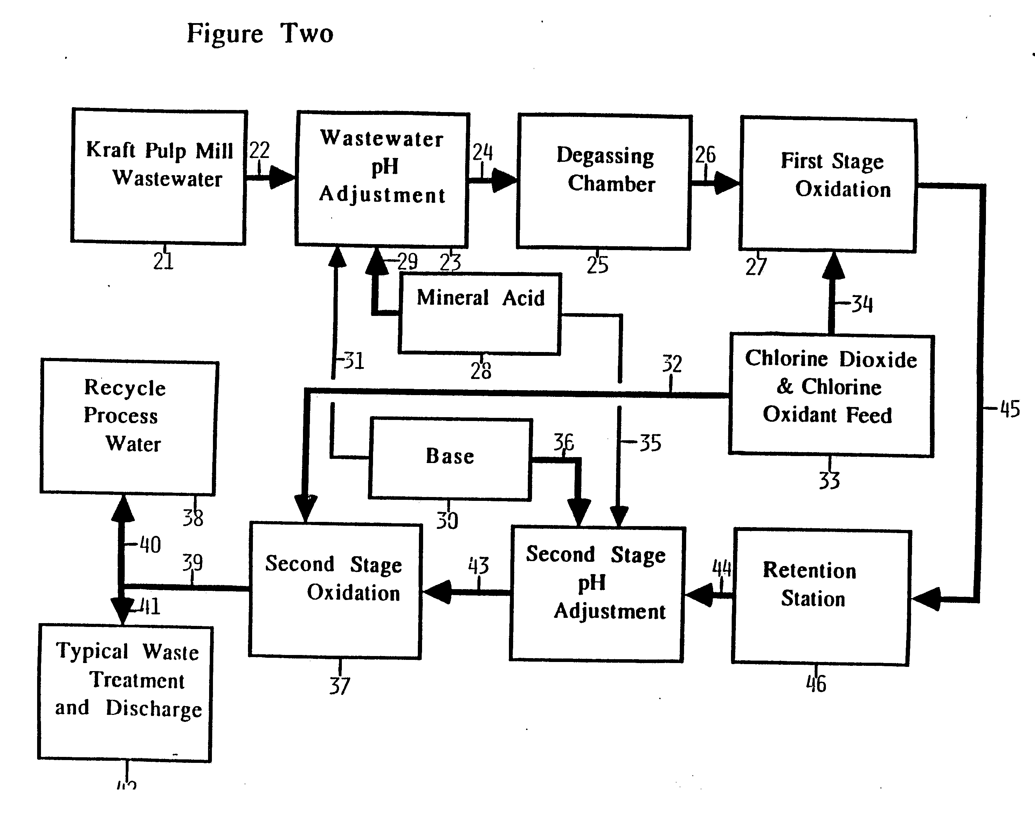

With reference to Fig. 2, a Kraft mill waste water stream is introduced through line 22 into a tank or receiving vessel 23 for pH adjustment. Mineral acid from supply tank 28, for example hydrochloric acid or sulfuric acid, is supplied through line 29 and/or base from supply tank 30 is supplied through line 31 for suitable adjustment of the pH. The pH variation of the waste water stream may require the intermittent addition of both acid and base to tightly control the reaction pH. Absolute reaction pH control is an integral and necessary step of the instant process. The waste water stream having a pH of from about 3.0 to about 6.0 is subjected to degassing and defoaming. In order for efficient mass transfer of the oxidants, the entrained air and evolving carbon dioxide from the pH adjustment step should be purged from the stream and following such treatment the purged stream is introduced into reaction vessel 27 for first stage oxidation. This is carried out in oxidation vessel or tower 27 by contacting the degassed and defoamed stream with an optimum dose of chlorine dioxide or chlorine dioxide and chlorine based on the required color reduction. After the oxidation is completed the treated stream is supplied via line 45 into a retention station 46 to allow the desired decolorizing reaction to go to completion. After 15-30 minutes have elapsed, the wastewater is subjected to a second pH adjustment with mineral acid from supply tank 28 and/or base from supply tank 30. After the pH has been attained for achieving optimum reaction, the treated wastewater is introduced via line 43 into a vessel or tower 37 wherein it is contacted for the second time (second stage oxidation) with chlorine dioxide or chlorine dioxide and chlorine. The second stage oxidation is intended as a polishing stage and is included to ensure that the required final discharge color has been obtained. The treated stream from the second stage oxidation may be recycled for further use in the process for example as wash water or further treated as typical mill effluent.

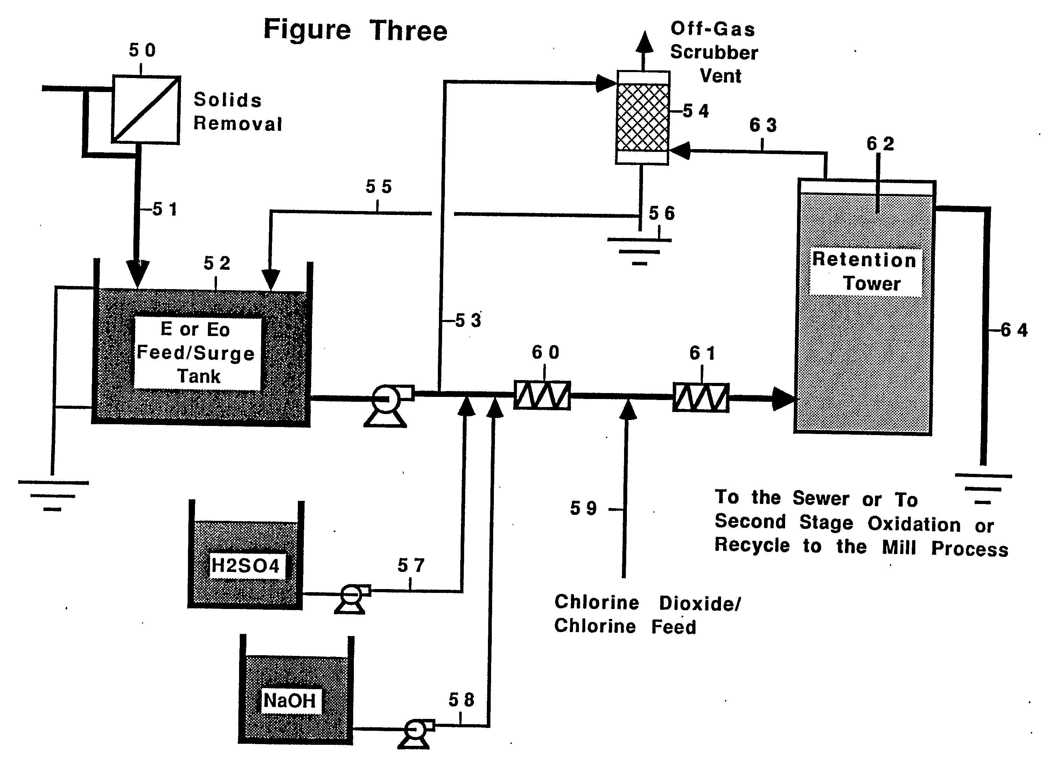

Referring now to Figure 3, mill Eo filtrate is first passed through a solids removal stage 50. The removal of fiber and other suspended solids will reduce the competition for oxidant ClO2. After removal of the solids, filtrate is passed through conduit 51 into feed/surge tank 52. Filtrate from the feed tank 52 is also used as scrubbing medium for the off gas scrubber 54 and is for this purpose delivered to the off gas scrubber through conduit 53. The scrubber underflow is returned to the feed tank using conduit 55 or sent to the sewer 56. The Eo filtrate stream at approximately 150° F and pH 10 is adjusted to a pH of from 3 to 6 by acid and caustic (lines 57 and 58 respectively) and passed through a static in line mixer. The pH stream is then oxidized by either chlorine dioxide or a combination of chlorine dioxide and chlorine supplied via conduit 59. A heat exchanger 60 is located just before the oxidant injection point to ensure that the temperature is maintained at from 140 to 150° F and preferably at 150° F. After oxidation and further in line mixing, treated filtrate enters a retention tower 62 where it is held for from 5 to 30 minutes of bulk liquid retention. Conduit 63 delivers oxidized filtrate to the off-gas scrubber 54. Conduit 64 delivers oxidized filtrate to a second stage oxidation which may be a polishing stage or a full oxidation stage similar to the one just described or in the alternative to the sewer or for recycle to the mill process. The oxidant feed rate is controlled based on inlet filtrate flow and color concentration in the effluent.

The process has been described generally with reference to the drawings. The process parameters can be defined as follows:

|  | Optimum | Acceptable Range* |
|---|---|---|
| Total oxidant dose (ppm as active Cl$_2$/SCU) | 0.20 | 0.15-0.30 |
| Reaction Temperature (°F) | 150 | 60-200 |
| Reaction pH | 4.5 | 3.0-6.0 |

*The total oxidant dose is dependent on the quantity of filtrate to be treated and the per cent color reduction that is required.

The process parameters as above recited are based on a 90% reduction target.

The following examples are given in order to more fully and completely describe the invention and are to be taken as illustrative only and not as limitative of the scope of the invention.

## EXAMPLE ONE

In this Example a batchwise chemical oxidation of bleach plant caustic extraction stage filtrate (CEF) to reduce color was carried out. The treatment was carried out in a continuous stirred tank reactor (CSTR) having dimensions of 0.5 meters in height, and 0.25 meters in diameter. The CSTR was provided with means for continuous agitation, and reaction temperature and pH control. Approximately 11 liters of CEF was introduced into the reactor at a concentration of about 19,500 standard color units (SCU). The CEF was pH adjusted to approximately 6.0. About 3.7 liters of chlorine dioxide/chlorine solution was introduced having concentration of approximately 12 grams as active chlorine/liter (that is 4.5 grams as chlorine dioxide/liter and 0.3 grams as active chlorine/liter). The solution and filtrate were well mixed and allowed to react for 15 minutes. A 90+% color reduction was achieved. The chloroform generation was 0.52 ppm/M ppm color reduced. The total organic chloride was reduced by 4 ppm/M ppm color reduced. Chlorate generation was approximately 15 ppm/M ppm color reduced. (All values were corrected for dilution).

## EXAMPLE 2

Bleach Plant Caustic Extraction Filtrate (CEF) Feed:

Influent flow rate (gallons/day)     1,000,000
Color Concentration (Standard Color Units or SCU)     25,000
pH     10
Temperature (Degrees Fahrenheit)     145
Total Organic Chloride (ppm)     215
Chloroform (ppm)     1.0
Chlorate (ppm)     34

pH Adjustment with Sulfuric Acid:

H$_2$SO$_4$ Flow (lbs./day)     2000

Chemical Oxidation:

Chlorine Dioxide Feed(lbs./day)     11,640
Chlorine Feed (lbs./day)     360

Treated Bleach Plant CEF Effluent: (corrected for dilution)

Color Concentration (SCU)    2000
pH    4.5
Total Organic Chloride (ppm)    150
Chloroform (ppm)    2.0
Chlorate (ppm)    314


EXAMPLES 3-27


The procedure of Example 1 was repeated but with adjustment of the pH temperature, $Cl_2$ and $ClO_2$ dose, filtrate source as hereinafter set out.

| Example | Initial Color (SCU) | Total Dose | $Cl_2$ Dose | $ClO_2$ Dose | Reaction Temp. (°F) | Final pH | Color Reduction % | $CHCl_3$ (lbs./M lb. SCU Reduced) |
|---|---|---|---|---|---|---|---|---|
| | | (lbs. as active $Cl_2$/lbs SCU) | | | | | | |
| Softwood Bleaching Caustic Extraction Filtrate | | | | | | | | |
| 3 | 19500 | 0.15 | 0.005 | 0.145 | 60 | 3.0 | 87 | 0.08 |
| 4 | 19500 | 0.15 | 0.005 | 0.145 | 180 | 6.0 | 87 | 0.08 |
| 5 | 19500 | 0.20 | 0.017 | 0.183 | 60 | 3.0 | 92 | 0.52 |
| 6 | 19500 | 0.20 | 0.017 | 0.183 | 180 | 6.0 | 92 | 0.52 |
| 7 | 19250 | 0.25 | 0.009 | 0.241 | 60 | 3.0 | 95 | 0.33 |
| 8 | 19250 | 0.25 | 0.009 | 0.241 | 180 | 6.0 | 95 | 0.33 |
| 9 | 19500 | 0.15 | 0.005 | 0.145 | 150 | 4.5 | 87 | 0.08 |
| 10 | 19500 | 0.15 | 0.012 | 0.138 | 150 | 4.5 | 89 | 0.53 |
| 11 | 19500 | 0.20 | 0.017 | 0.183 | 150 | 4.5 | 92 | 0.52 |
| 12 | 19250 | 0.25 | 0.009 | 0.241 | 150 | 4.5 | 95 | 0.33 |
| Softwood Bleaching Oxidative-Extraction (Eo) Filtrate | | | | | | | | |
| 13 | 6000 | 0.20 | 0.006 | 0.194 | 60 | 3.0 | 82 | 0.91 |
| 14 | 6000 | 0.20 | 0.006 | 0.194 | 180 | 3.0 | 82 | 0.91 |
| 15 | 6000 | 0.20 | 0.006 | 0.194 | 60 | 3.0 | 82 | 0.91 |
| 16 | 6000 | 0.20 | 0.006 | 0.194 | 180 | 6.0 | 82 | 0.91 |
| 17 | 6000 | 0.25 | 0.007 | 0.243 | 60 | 3.0 | 84 | 0.69 |
| 18 | 6000 | 0.25 | 0.007 | 0.243 | 180 | 6.0 | 84 | 0.69 |
| 19 | 6000 | 0.25 | 0.007 | 0.243 | 60 | 3.0 | 84 | 0.69 |
| 20 | 6000 | 0.25 | 0.007 | 0.243 | 180 | 6.0 | 84 | 0.69 |
| 21 | 6000 | 0.30 | 0.009 | 0.291 | 60 | 3.0 | 92 | 0.85 |
| 22 | 6000 | 0.30 | 0.009 | 0.291 | 180 | 6.0 | 92 | 0.85 |
| 23 | 6000 | 0.30 | 0.009 | 0.291 | 60 | 3.0 | 92 | 0.85 |
| 24 | 6000 | 0.30 | 0.009 | 0.291 | 180 | 6.0 | 92 | 0.85 |
| 25 | 6000 | 0.20 | 0.006 | 0.194 | 150 | 4.5 | 82 | 0.91 |
| 26 | 6000 | 0.25 | 0.007 | 0.243 | 150 | 4.5 | 84 | 0.69 |
| 27 | 6000 | 0.30 | 0.009 | 0.291 | 150 | 4.5 | 92 | 0.85 |

In all of the Examples, any chloroform generation observed occurred within the first 30 seconds of color oxidation reaction the color reduction reaction was 90 + % complete in approximately three minutes. The last 2 to 10% of color reduction was achieved in between 3 and 15 minutes.

The fast reacting nature of the oxidation establishes that 15 minutes retention time is needed for maximum color reduction.

It is only the total oxidant dose (in ppm as active $Cl_2$/SCU) which is significant in color reduction regardless of chlorine or chlorine dioxide content. Color reduction dependency on only the total oxidant dose implies that chlorine dioxide is as effective as chlorine in color reduction. Similarly, chloroform generation is only dependent on the dose of chlorine used to reduce color. The sole dependency of chloroform generation on chlorine indicates that chlorine dioxide does not contribute to chloroform

6

generation. The small amount of chloroform generated from the runs using all chlorine dioxide was due to the chlorine contamination in the oxidant solution.

## EXAMPLES 28 - 39

The process was carried out as presented in Figure 2. A Kraft mill waste stream was pH adjusted with mineral acid and base to a pH as set out in the following table. The pH variation of the waste stream required the intermittent use of both acid ($H_2SO_4$ and base NaOH) to tightly control the reaction pH. The pH adjusted stream was degassed/stripped for removing the carbon dioxide and other gases created by the pH adjustment prior to oxidation. The degassed i.e., purged stream was contacted with the specified dose of chlorine dioxide and chlorine based on the required color reduction. The treated stream was exposed to retention to allow the reaction to go to completion prior to second stage pH adjustment with base and/or mineral acid and a second stage oxidation carried out. The treated stream was recycled for process use i.e., bleach tower mining water or treated as typical mill effluent.

| Example | Initial Color (SCU) | Total Dose | $Cl_2$ Dose | $ClO_2$ Dose | Reaction Temp. (°F) | Final pH | Color Reduction % | $CHCl_3$ (lbs./M lb. SCU Reduced) | Total Organic Chloride |
|---|---|---|---|---|---|---|---|---|---|
| | | (lbs. as active $Cl_2$ lbs SCU) | | | | | | | |
| NM * | | | | | | | | | |
| 28 | 1940 | 0.15 | 0.150 | 0.000 | 140 | 2.0 | 76 | 2.62 | * NM |
| 29 | 2880 | 0.15 | 0.150 | 0.000 | 140 | 2.0 | 89 | 5.11 | NM |
| 30 | 2750 | 0.15 | 0.13 | 0.02 | 140 | 2.0 | 77 | 1.89 | NM |
| 31 | 1940 | 0.15 | 0.13 | 0.02 | 140 | 9.0 | 90 | 4.58 | NM |
| 32 | 1950 | 0.15 | 0.005 | 0.145 | 150 | 4.5 | 87 | 0.08 | -1.67 |
| 33 | 1950 | 0.15 | 0.012 | 0.138 | 150 | 4.5 | 89 | 0.53 | -2.41 |
| 34 | 1950 | 0.20 | 0.017 | 0.183 | 150 | 4.5 | 92 | 0.52 | -4.01 |
| 35 | 1925 | 0.25 | 0.009 | 0.241 | 150 | 4.5 | 95 | 0.33 | -3.78 |
| Softwood Bleaching Oxidative-Extraction Filtrate | | | | | | | | | |
| 36 | 6000 | 0.20 | 0.006 | 0.194 | 150 | 4.5 | 82 | 0.91 | 11.91 |
| 37 | 6000 | 0.30 | 0.009 | 0.291 | 150 | 4.5 | 92 | 0.85 | 8.86 |
| 38 | 6000 | 0.25 | 0.007 | 0.243 | 125 | 4.5 | 84 | 0.69 | 5.52 |
| Hardwood Bleaching Oxidative-Extraction Filtrate | | | | | | | | | |
| 39 | 8000 | 0.15 | 0.15 | 0 | 150 | 6 | 83 | 7.74 | NM * |

*not measured

These examples show the criticality of the various process conditions, for example pH, $Cl_2/ClO_2$ dose, on color reduction and formation of chloroform.

## Claims

1. Method of reducing color in bleach plant extraction filtrates derived in the bleaching of pulp which comprises contacting a bleach plant extraction filtrate with chlorine dioxide or chlorine dioxide in admixture with an amount of chlorine which does not exceed 10% of the entire dose of chlorine and chlorine dioxide expressed as active chlorine at a temperature of 60 to 200° and a pH of about 3.0 to about 6.0 wherein the total dose of chlorine dioxide or chlorine dioxide in admixture with chlorine is 0.15 to 0.30 in pounds as active chlorine/pound of color (0.15 to 0.30 ppm as active chlorine/SCU).

2. Method according to Claim 1, wherein said chlorine does not exceed 8.5% of the entire dose of chlorine and chlorine dioxide expressed as active chlorine.

3. Method according to Claim 1, wherein said bleach plant extraction filtrate is contacted with chlorine dioxide only.

4. Method according to Claim 1, wherein said temperature is about 140 to about 150° F.

5. Method according to Claim 1, wherein said pH is 4.5.

6. Method according to Claim 1, wherein said bleach plant extraction filtrate is derived from the brown stock washing stage of the pulp bleaching process.

7. Method according to Claim 1, wherein said pH is adjusted with mineral acid to the indicated range and is maintained substantially constant by adjustment with mineral acid and/or base.

8. Method according to Claim 7, wherein said mineral acid is sulfuric acid and said base is sodium hydroxide.

9. Method according to Claim 1, wherein the treated substantially color free extraction filtrate is recycled into the bleach plant process.

10. Method according to Claim 1, wherein said bleach plant extraction filtrate after having been treated with acid for adjustment of its pH, is subjected to degassing and defoaming for removal of any entrained air and carbon dioxide generated in the pH adjustment.

11. Method according to Claim 10, wherein the steps of pH adjustment, degassing and defoaming and treatment with chlorine dioxide or chlorine dioxide in admixture with chlorine are repeated at least one more time.

12. Method according to Claim 1, wherein said bleach plant extraction filtrate is oxidative extraction filtrate ($E_o$).

13. Method according to Claim 1, wherein said temperature is 150° F, said pH is 4.5 and said total dose of chlorine dioxide or chlorine dioxide in admixture with chlorine is 0.15 to 0.25.

14. Method according to Claim 13, wherein said total dose of chlorine dioxide or chlorine dioxide in admixture with chlorine, is 0.20.

15. Method of reducing color in bleach plant extraction filtrates derived in the bleaching of pulp which includes the steps of:

(a) adjusting and maintaining the pH of said filtrate at from 3.0 to 6.0 by introducing into said filtrate effective amounts of mineral acid and/or base;

(b) following suitable adjustment of the pH and at a temperature of 60 to 200° F subjecting said filtrate to at least one oxidizing step using chlorine dioxide or chlorine dioxide in admixture with an amount of chlorine which does not exceed 10% of the entire dose of chlorine expressed as active chlorine, in an amount and for a time sufficient for color reduction to take place.

16. Method according to Claim 15, which includes the additional step of utilizing the substantially color free and chloroform and other chlorinated hydrocarbon free filtrates as at least part of the bleaching process.

17. Method according to Claim 15, wherein the resultant substantially color free and chloroform and other chlorinated hydrocarbon free filtrate is discharged into a sewer.

18. Method according to Claim 15, which includes the step of subjecting said filtrate having a pH of from about 3.0 to about 6.0 to degassing and defoaming for removing any entrained air and carbon dioxide evolved in said pH admixture prior to said oxidizing step.

19. Method according to Claim 15, wherein prior to said first pH adjustment step any solids present in said filtrate is separated out.

20. Method according to Claim 15, wherein chlorine dioxide is used in said oxidizing step.

8

# Figure One

EP 0 311 013 A2

# Figure Two

EP 0 311 013 A2

# Figure Three

**50** — Solids Removal

**51**

**52** — E or Eo Feed/Surge Tank

**55**

Off-Gas Scrubber Vent

**54**

**63**

**62** — Retention Tower

**56**

**53**

**60**

**61**

**64**

**57** — H2SO4

**58** — NaOH

**59**

Chlorine Dioxide/ Chlorine Feed

To the Sewer or To Second Stage Oxidation or Recycle to the Mill Process

EP 0 311 013 A2